# DEMANDE DE BREVET EUROPEEN

(11) **EP 2 108 921 A1**
(43) Date de publication de la demande: **14.10.2009**
(21) Numéro de dépôt: 09157782.5
(22) Date de dépôt: 09.04.2009
(51) Int. Cl.: G01B 11/25, G01N 21/956

(54) **Dispositif de contrôle de la qualité de surface**

(30) Priorité: 11.04.2008 FR 0802001
(71) Demandeur: Visuol Technologies, 57070 Saint Julien Les Metz (FR)
(72) Inventeur: Surrel, Yves, 42100, SAINT ETIENNE (FR)
(74) Mandataire: Delorme, Nicolas

(57) **Abrégé**

Ce dispositif de contrôle de surface par déflectométrie comprend :
- un afficheur (2) conçu pour générer sur sa face dite avant un réseau de franges alternant des bandes claires et obscures
- au moins un capteur (3) conçu pour faire l'acquisition de l'image réfléchie par la surface à contrôler (5) positionné sur la face avant de l'afficheur et à la périphérie de ce dernier, et
- un moyen réfléchissant positionné par rapport à la surface à contrôler (5) de façon à diriger l'image réfléchie par la surface à contrôler (5) vers le capteur (3), l'afficheur étant orienté par rapport à la surface à contrôler selon un angle tel que l'afficheur est vu par le capteur sous une incidence normale.

## Description

La présente invention concerne un dispositif de contrôle de la qualité d'une surface.

Le contrôle de la qualité d'une surface peut se faire par le principe de déflectométrie.

Ce principe consiste à :
- afficher au voisinage d'un objet dont la surface est à contrôler, un réseau de traits ou de franges rectilignes,
- capter et analyser l'image réfléchie par la surface à contrôler.

De façon classique, un dispositif de contrôle par déflectométrie comprend un afficheur qui permet d'afficher un réseau de franges dont les caractéristiques sont connues à proximité de la surface à contrôler et un capteur d'images qui est généralement une caméra CCD ou équivalent. Par franges, on entend une série de bandes alternativement claires et obscures et généralement rectilignes générées par l'afficheur, qui peuvent être noires et blanches ou de toute autre couleur.

L'afficheur et le capteur d'images peuvent être logés dans un boîtier portable. L'utilisation nomade d'un dispositif de contrôle par déflectométrie impose une certaine compacité du dispositif.

La contrepartie de cette compacité est alors une limitation de la dimension de la surface susceptible d'être contrôlée.

A ce sujet, le document JP 2007 047022 montre un dispositif de contrôle par déflectométrie qui est en mesure de contrôler une surface peu importante. La contrepartie de la relative compacité du dispositif décrit dans ce document est la faiblesse de la dimension de la surface controlée.

En effet, le facteur limitant de la surface à contrôler est le champ du capteur d'images. Pour un capteur doté d'une optique donnée, il faut éloigner le capteur d'images de la surface à contrôler pour augmenter la dimension de la surface contrôlée. Ceci se fait au détriment de l'encombrement, ce qui n'est, en général, pas souhaitable pour un dispositif portable. Or, dans une perspective industrielle, la dimension de la surface contrôlée est critique, puisque plus la surface contrôlée est de grande dimension, plus le contrôle s'avère utile dans une logique industrielle.

Dans ce contexte technique, un but de l'invention est donc de proposer un dispositif de contrôle de surface par déflectométrie qui, tout en étant d'un encombrement réduit, permet de contrôler une surface de grande dimension.

L'invention concerne un dispositif de contrôle de surface par déflectométrie **caractérisé en ce qu**'il comprend :
- un afficheur conçu pour générer, sur sa face dite avant, un réseau de franges alternant des bandes claires et obscures, et
- au moins un capteur conçu pour faire l'acquisition de l'image réfléchie par la surface à contrôler positionné sur la face avant de l'afficheur et à la périphérie de ce dernier, et
- un moyen réfléchissant positionné par rapport à la surface à contrôler de façon à diriger l'image réfléchie par la surface à contrôler vers le capteur, l'afficheur étant orienté par rapport à la surface à contrôler selon un angle tel que l'afficheur est vu par le capteur sous une incidence normale.

Une disposition originale de l'invention est d'assurer un renvoi de l'image réfléchie par la surface à contrôler vers un capteur qui est lui-même positionné à proximité de l'afficheur et qui est incliné par rapport à la surface à contrôler. L'inclinaison de l'afficheur par rapport à la surface à contrôler est un point important de l'invention car cela permet que la normale à l'écran soit parallèle à l'axe optique. Ainsi on peut éviter tout phénomène de distorsion des franges affichées par effet de perspective. On obtient ainsi un dispositif considérablement plus compact que les dispositifs de l'art antérieur puisque, selon l'invention, le capteur est positionné au voisinage de l'afficheur qui est l'élément le plus encombrant du dispositif. Pour mémoire, dans les dispositifs de l'art antérieur, la caméra se trouve positionnée à une distance de la surface à contrôler suffisamment éloignée pour permettre au champ de la caméra en question de couvrir une aire significative de la surface à contrôler. L'invention permet de dépasser cet inconvénient inhérent à l'art antérieur ; en pratique l'invention permet de réaliser un repliement de la pyramide des rayons lumineux réfléchis par la surface à contrôler vers un capteur qui peut être placé dans une position favorisant un faible encombrement global du dispositif ; Le positionnement du ou des capteurs dans l'espace délimité par l'afficheur et la surface à contrôler est une disposition importante de l'invention pour la compacité du dispositif. Cette disposition est extrêmement favorable en termes d'encombrement puisque le dos de l'afficheur est alors dépourvu de tout organe proéminent. La pyramide des rayons réfléchis est alors repliée devant l'écran d'affichage et non pas derrière, ce qui contribue la compacité du montage.

Dans une forme de réalisation préférée de l'invention, au moins un capteur peut être orienté selon une direction perpendiculaire au miroir de renvoi ou au moins capteur peut être orienté selon une direction parallèle au miroir de renvoi et est associé à un moyen de renvoi de type miroir ou équivalent qui modifie le trajet des rayons lumineux provenant du miroir de renvoi vers le capteur.

De manière concrète, le moyen réfléchissant est un miroir de renvoi.

De préférence, chacun des capteurs est monté directement ou indirectement sur l'afficheur. L'invention permet d'utiliser l'afficheur comme support du capteur soit en fixant directement le capteur sur l'afficheur soit en fixant indirectement le capteur sur l'afficheur par l'intermédiaire d'entretoises ou de pattes de fixation.

Selon une possibilté, au moins un capteur est orienté selon une direction perpendiculaire au miroir de renvoi.

En pratique le dispositif peut comprendre deux capteurs orientés en direction d'un miroir de renvoi.

De façon concrète, l'afficheur peut être un écran de type LCD et le capteur peut être une caméra de type CCD.

Pour sa bonne compréhension l'invention est décrite en référence au dessin ci annexé représentant, à titre d'exemples non limitatifs, plusieurs formes de réalisation d'une disposition

Figures 1 à 3 montrent un dispositif de contrôle selon une première forme de réalisation respectivement en perspective, en vue de côté et en vue de dessus,

Figures4 à 6 montrent un dispositif de contrôle selon une deuxième forme de réalisation respectivement en perspective, en vue de côté et en vue de dessus,

Préliminairement, il est précisé que les dessins représentent l'invention de manière schématique.

En particulier, les dessins ne représentent que les constituants essentiels du dispositif selon l'invention et, pour une meilleure clarté, font abstraction de constituants tels que par exemple, boitier de protection, pupitre de commande, alimentation électrique, électronique de contrôle etc.

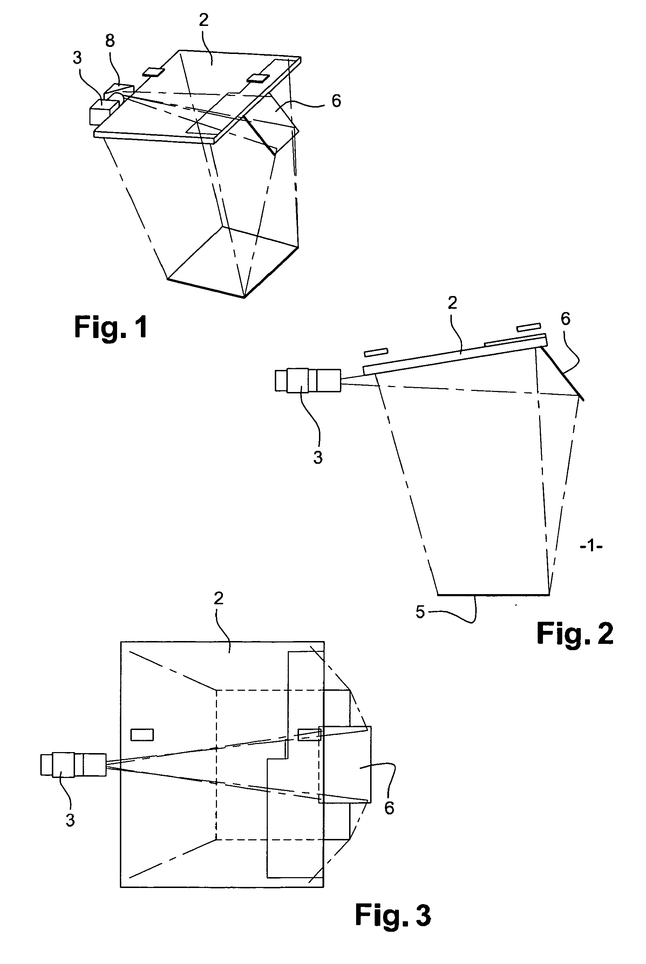

Si l'on se reporte tout d'abord aux figures 1 à 3, il apparait que le dispositif 1 comprend un afficheur 2. En pratique, l'afficheur 2 peut être un écran de type LCD qui génère une ou plusieurs images fixes composées d'un réseau de franges alternant des bandes claires et obscures, sans que cela implique qu'elles soient complètement blanches et noires. Au contraire, de manière concrète, il peut être souhaitable que le profil de l'intensité lumineuse soit le plus proche possible d'une répartition sinusoïdale. L'utilisation d'un écran LCD permet de mettre en oeuvre la technique du décalage de phase par l'affichage de franges déplacées progressivement sur la surface à contrôler. L'écran LCD permet également d'afficher des franges selon des directions orthogonales ce qui permet une mesure complète, c'est-à-dire que les deux composantes orthogonales de la pente locale de la surface peuvent être mesurées en tout point du champ de mesure, ce qui fournit une information complète sur la géométrie de la surface.

Le dispositif 1 comprend de plus un capteur 3. Ce capteur 3 peut être une caméra CCD qui est généralement constituée d'un objectif d'imagerie, d'un capteur d'image, d'un système d'amplification du signal détecté et d'un système de codification du signal, le plus souvent sous forme numérique. A cet effet, la caméra CCD comprend des photodétecteurs qui traduisent, en signal électrique correspondant, l'énergie rayonnante émise ou réfléchie par un phénomène donné, et qui permet de reconstituer l'image de ce phénomène.

Dans le dispositif selon l'invention, le capteur 3 est utilisé pour reconstituer l'image générée par l'afficheur 2 - un réseau de franges - qui est réfléchie par une surface à contrôler 5. La surface à contrôler 5 peut être, sans limitation, une surface métallique telle qu'une carrosserie de véhicule, une surface de verre, de plastique, de matériau composite, une surface de papier, de cuir etc.

Le dispositif selon l'invention est de plus doté d'un miroir de renvoi 6. Ce miroir de renvoi 6 est fixé par des moyens appropriés (non représentés) soit à l'afficheur 2 soit à un boitier (non représenté) dans lequel l'ensemble du dispositif est logé.

La présence du miroir de renvoi 6 est d'une grande importance dans la structure du dispositif selon l'invention puisque le miroir de renvoi 6 permet de diriger l'image réfléchie par la surface à contrôler 5 vers le capteur 3. Ce dernier est positionné entre l'afficheur 2 et la surface à contrôler 5. Dans cette position, le capteur 3 crée une faible proéminence ce qui s'avère très favorable pour l'encombrement général du dispositif.

Dans l'exemple de réalisation représenté à la figure 1, le capteur 3 fait face au miroir de renvoi 6. En d'autres termes, le capteur 3 est orienté de manière telle que son axe d'acquisition est perpendiculaire au miroir de renvoi 6.

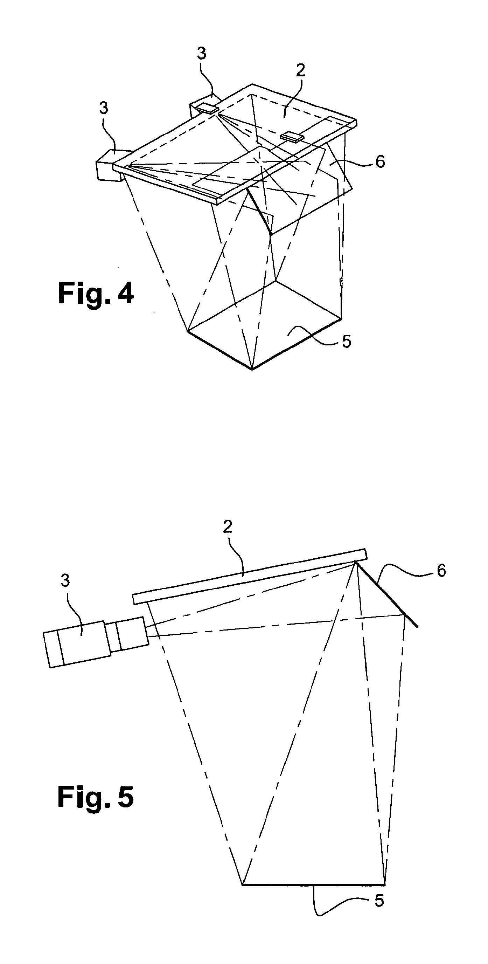

Les figures 4 et 5 montrent deux formes d'exécution de l'invention dans laquelle le dispositif embarque deux capteurs 3, ce qui permet d'élargir le champ.

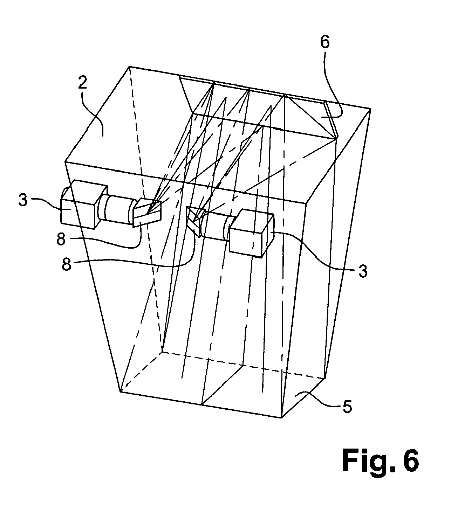

La compacité optimale du dispositif est obtenue lorsque le capteur 3 est orienté parallèlement au miroir de renvoi 6. La figure 6 montre cette forme d'exécution de l'invention dans laquelle un prisme 8 est placé devant le capteur 3. Cette disposition permet d'éviter la protubérance du corps de la caméra, de ses câbles d'alimentation et de l'espace nécessaire à leur protection.

Dans ces differentes formes de réalisation, la pyramide des rayons réfléchis est repliée non pas derrière l'afficheur 2 mais du côté de la face avant de l'afficheur. Par face avant, on entend la face de l'afficheur 2 sur laquelle le réseau de franges est généré. En pratique, le capteur 3 est fixé sur la périphérie de l'afficheur 2 pour ne pas perturber l'affichage du réseau de franges.

On note que dans cette forme de réalisation le miroir de renvoi 6 est également fixé à la périphérie de l'afficheur 2. Cet arrangement s'avère particulièrement performant en termes de compacité puisque l'ensemble des constituants se trouve placé dans l'espace délimité par la face avant de l'afficheur 2 et la surface à contrôler 5.

On retrouve la possibilité d'orienter le capteur 3 pour qu'il soit perpendiculaire au miroir de renvoi 6 ou qu'il soit parallèle au miroir de renvoi 6. Dans ce dernier cas montré à la figure 8, un prisme à réflexion totale 8 est associé au capteur 3 pour modifier le trajet des rayons lumineux provenant du miroir de renvoi 6 vers le capteur 3. Ce prisme peut être remplacé par tout autre dispositif réfléchissant remplissant la même fonction.

L'invention fournit ainsi un dispositif de contrôle de surface dans lequel le capteur 3 peut être juxtaposé à l'afficheur 2 de réseau de franges sans pour autant diminuer le champ de contrôle de mesure.

Le principe de l'invention se retrouve intégralement dans ces formes d'exécution puisque l'on retrouve la présence d'un miroir de renvoi 6 qui dirige l'image réfléchie par la surface 5 à contrôler vers deux capteurs 3.

Dans ces deux formes de réalisation, le dispositif peut ainsi intégrer un miroir qui présente de plus grandes dimensions que celui qui est prévu dans les dispositifs montrés aux figures 1 à 8.

Dans la forme d'exécution de l'invention montrée aux figures 4 à 6, le miroir de renvoi 6 est placé du coté avant de l'afficheur 2, et des prismes permettent de positionner les capteurs parallèlement au bord de l'écran. Dans cette configuration de l'invention particulièrement compacte, les deux capteurs 3 sont également situés du coté avant de l'afficheur 2.

Bien entendu l'invention n'est pas limitée à la forme de réalisation décrite ci-dessus à titre d'exemple non limitatif mais elle en embrasse au contraire toute les formes de réalisation. Ainsi il pourrait être envisagé de doter le dispositif de contrôle de deux miroirs de renvoi et de deux capteurs de façon à pouvoir augmenter la surface à contrôler tout en conservant un encombrement compact au dispositif.

## Revendications

1. Dispositif de contrôle de surface par déflectométrie **caractérisé en ce qu'**il comprend :
- un afficheur (2) conçu pour générer sur sa face dite avant un réseau de franges alternant des bandes claires et obscures
- au moins un capteur (3) conçu pour faire l'acquisition de l'image réfléchie par la surface à contrôler (5) positionné sur la face avant de l'afficheur et à la périphérie de ce dernier, et
- un moyen réfléchissant positionné par rapport à la surface à contrôler (5) de façon à diriger l'image réfléchie par la surface à contrôler (5) vers le capteur (3), l'afficheur étant orienté par rapport à la surface à contrôler selon un angle tel que l'afficheur est vu par le capteur sous une incidence normale.

2. Dispositif selon la revendication 1, **caractérisé en ce que** au moins un capteur (3) est orienté selon une direction parallèle au miroir de renvoi (6) et est associé à un moyen de renvoi de type miroir (8) ou équivalent qui modifie le trajet des rayons lumineux provenant du miroir de renvoi (6) vers le capteur (3).

3. Dispositif selon la revendication 1 ou la revendication 2 **caractérisé en ce que** le moyen réfléchissant est un miroir de renvoi.

4. Dispositif selon la revendication 1 ou la revendication 2, **caractérisé en ce que** chacun des capteurs (3) est monté directement ou indirectement sur l'afficheur (2).

5. Dispositif selon l'une des revendications 1 à 4, **caractérisé en ce que** au moins un capteur (3) est orienté selon une direction perpendiculaire au miroir de renvoi (6).

6. Dispositif selon l'une des revendications 1 à 5, **caratérisé en ce qu'**il comprend deux capteurs (3) orientés en direction d'un miroir de renvoi (6).

7. Dispositif selon l'une des revendications 1 à 6, **caractérisé en ce que** l'afficheur (2) est un écran de type LCD ou plasma.

8. Dispositif selon l'une des revendications 1 à 7, **caractérisé en ce que** le capteur (3) est une caméra de type CCD.
